# EUROPEAN PATENT APPLICATION

(11) **EP 4 799 475 A1**
(43) Date of publication of application: **02.09.2026**
(21) Application number: 25161102.6
(22) Date of filing: 28.02.2025
(51) Int. Cl.: A01K 1/00, A01K 1/06, B60P 3/04, F16B 7/04

(54) **BLOCKING DEVICE FOR RESTRAINING AN ANIMAL**

(71) Applicant: DEBON Spólka z ograniczona odpowiedzialnoscia, 63-830 Pepowo (PL)
(72) Inventor: Rulquin, Gregory, 88800 LIGNEVILLE (FR)
(74) Representative: Patentbox Kancelaria Patentowa

(57) **Abstract**

A blocking device for restraining an animal, comprising a separation bar (20); a bar retainer (10), for retaining the separation bar (20), comprising a housing (11) having a channel (12) formed therein for guiding an end portion (21) of the separation bar (20) along the housing (11), wherein the channel (12) comprises an upper entrance portion (12A) at an upper end of the housing (11) and a lower exit portion (12B) at a lower end of the housing (11); whereas: the upper entrance portion (12A) and the lower exit portion (12B) are laterally shifted with respect to each other, wherein the channel (12) comprises an intermediate portion (12C) laterally connecting the upper entrance portion (12A) and the lower exit portion (12B); the bar retainer (10) comprises a spring-loaded locking mechanism (30) movable transversely across the channel (12), for blocking upward movement of the separation bar (20) and for restraining the horizontal movement of the separation bar (20), when the end portion (21) of the separation bar (20) is positioned at the intermediate portion (12C) of the channel (12).

## Description

### TECHNICAL FIELD

The present disclosure relates to animal transport equipment, and more particularly to a quick-release locking mechanism for a separation bar in a horse trailer.

### BACKGROUND

Animal transport equipment, particularly for horses, often includes separation bars or partitions to divide the transport space and provide support for the animals during transit. These bars are typically secured at both ends to the walls or the structure of a transport vehicle.

Conventional separation bar systems in horse trailers generally utilize fixed mounting points with removable bars. The bars are commonly attached to the walls or the structure of a transport vehicle by means of hooks, pins, or other mechanical fasteners that allow for installation and removal of the bars.

While functional, traditional separation bar mounting systems can present challenges in certain situations. Especially, in emergency scenarios where rapid removal of the bars is necessary, conventional fastening mechanisms may prove cumbersome or difficult to operate quickly.

Another consideration with existing systems is a potential for injury if an animal becomes entangled with or trapped by a separation bar. In a panic situation, a horse may attempt to climb over or push against the bar with significant force. Without a quick-release mechanism, freeing the animal safely can be problematic for handlers. In known locking mechanisms for a separation bar in a horse trailer, freeing a stuck animal by releasing the separation bar has to be done manually by a human handler.

Moreover, some of the existing locking mechanisms for a separation bar in a horse trailer offer a possibility of releasing the separation bar by a human handler, by activating the release from outside of the vehicle - by unscrewing an eye on an outer wall of the vehicle or by turning a knob located on an outer wall of the vehicle. The shortcoming of those separation bar release systems are not only that they need a human operator to make them work, but also that they require making a hole in a vehicle's wall in order to install the mechanism. Inevitable and permanent perforation of a vehicle's wall is a disadvantage of the existing systems.

For example, the European patent document EP2228256B1 discloses a mount for locking a beam in a horse transporter. The mount has a guide with a curved path, comprising an inlet opening and a closed-end area, where the end of the beam is locked. The shape of the guide prevents the beam from unintentionally unlocking from the mount.

### SUMMARY OF THE INVENTION

The present invention relates to a blocking device for restraining an animal, comprising: a separation bar and a bar retainer, for retaining the separation bar, comprising a housing having a channel formed therein for guiding an end portion of the separation bar along the housing, wherein the channel comprises an upper entrance portion at an upper end of the housing and a lower exit portion at a lower end of the housing. Wherein, the upper entrance portion and the lower exit portion are laterally shifted with respect to each other, wherein the channel comprises an intermediate portion laterally connecting the upper entrance portion and the lower exit portion. Wherein, the bar retainer comprises a spring-loaded locking mechanism movable transversely across the channel, for blocking upward movement of the separation bar and for restraining the horizontal movement of the separation bar, when the end portion of the separation bar is positioned at the intermediate portion of the channel.

The blocking device according to the invention allows for quick and safe securing and releasing of the separation bar, and, in emergency situations, enables automatic release of the separation bar under sufficient force, freeing the animal without human intervention.

Preferably, the intermediate portion is horizontal.

The horizontal intermediate portion creates a natural stopping point for the separation bar during insertion, preventing over-insertion and ensuring proper positioning for engagement of the separation bar with the locking mechanism.

Preferably, the intermediate portion comprises a socket for receiving the end portion of the separation bar.

The socket helps to minimize movement or rattling of the separation bar when secured in the blocking device.

Preferably, the locking mechanism comprises a bevel, located at the upper entrance portion, forming a slide for the end portion of the separation bar.

The bevel allows the end portion of the separation bar to smoothly slide over it, ensuring a controlled and easier insertion of the separation bar towards the intermediate portion of the channel.

Preferably, the locking mechanism comprises a handle located outside the housing, for manually releasing the separation bar.

The positioning of the handle outside the housing ensures that it remains easily accessible at all times, allowing an operator to locate and actuate the handle quickly.

Preferably, the blocking device comprises two bar retainers each for one end portion of the separation bar.

The dual bar retainer configuration provides enhanced stability and security for the separation bar within the animal transport equipment, with the two bar retainers working in tandem to securely hold the separation bar in place.

### BRIEF DESCRIPTION OF DRAWINGS

The object of the invention is illustrated by means of example embodiments in the drawing, wherein:
Figs. 1 and 2 show a bar retainer in isometric views;
Fig. 3 shows the bar retainer with a locking mechanism in a closed position;
Fig. 4 shows the bar retainer with the locking mechanism in an open position;
Fig. 5 shows the bar retainer, without a cover, with a locking mechanism in a closed position;
Fig. 6 shows the bar retainer, without a cover, with the locking mechanism in an open position;
Figs. 7A-8B show steps of inserting the separation bar into the bar retainer;
Figs. 9A-11 show steps of removing the separation bar from the bar retainer;
Fig. 12 shows the bar retainer in an exploded view.

### DETAILED DESCRIPTION

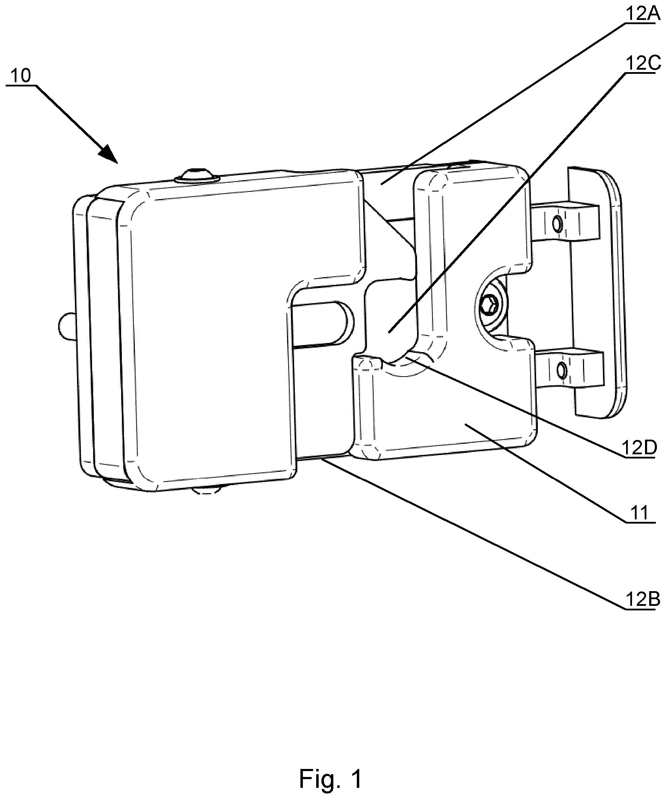

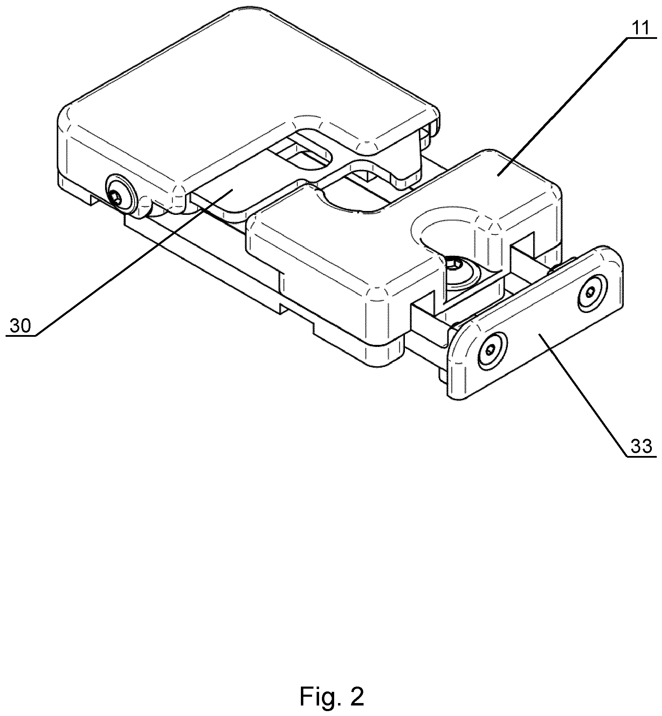

Figs. 1 and 2 show a bar retainer in isometric views. A blocking device for restraining an animal comprises a separation bar 20 and a bar retainer 10 for retaining the separation bar 20. The bar retainer comprises a housing 11 having a channel 12 formed therein for guiding an end portion 21 of the separation bar 20 along the housing 11, wherein the channel 12 comprises an upper entrance portion 12A at an upper end of the housing 11 and a lower exit portion 12B at a lower end of the housing 11. The upper entrance portion 12A and the lower exit portion 12B are laterally shifted with respect to each other, wherein the channel 12 comprises an intermediate portion 12C laterally connecting the upper entrance portion 12A and the lower exit portion 12B. The bar retainer 10 comprises a spring-loaded locking mechanism 30 movable transversely across the channel 12, for blocking upward movement of the separation bar 20 and for restraining the horizontal movement of the separation bar 20, when the end portion 21 of the separation bar 20 is positioned at the intermediate portion 12C of the channel 12.

In other words, the locking mechanism 30 is positioned in the channel 12 and is slidable transversely across the channel 12. The locking mechanism 30 may have a notched or contoured engagement surface that interfaces with the separation bar 20. The engagement surface surrounds the end portion 21 of the separation bar 20 from at least two directions - from the top and from the side. The horizontal movement of the separation bar 20 is restrained by the force of a spring element 32 of he locking mechanism 30.

Preferably, the locking mechanism 30 is guided within a corresponding slot or guideway 34 formed in the housing 11.

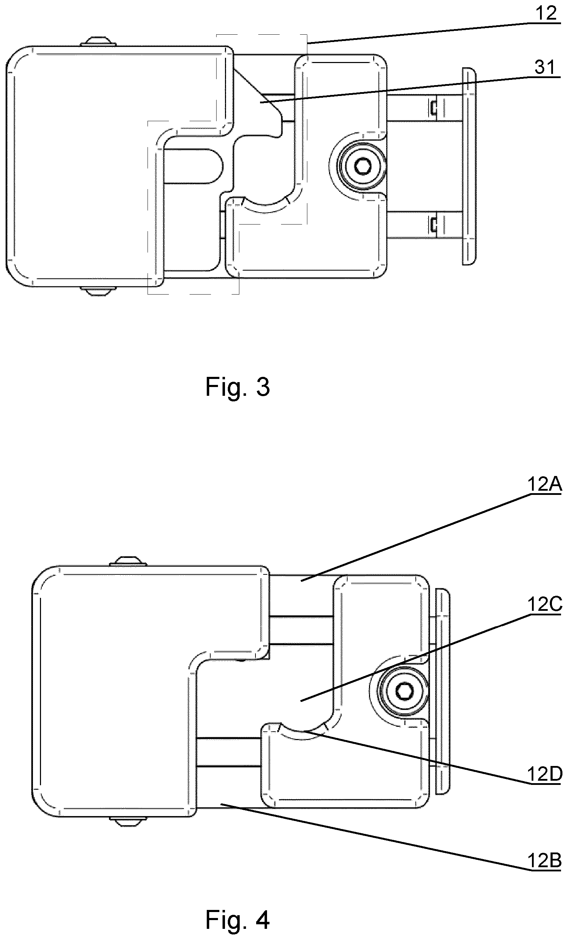

Fig. 3 shows the bar retainer with a locking mechanism in a closed position. Fig. 4 shows the bar retainer with the locking mechanism in an open position. The locking mechanism 30 is slidable between a closed position and an open position. In the closed position the locking mechanism 30 serves two primary functions: blocking upward movement of the separation bar 20 and restraining horizontal movement of the separation bar 20 when the end portion 21 of the separation bar 20 is positioned at the intermediate portion 12C of the channel 12. In the closed position, the locking mechanism 30, or its engagement surface, is at least partially located in the upper entrance portion 12A and the intermediate portion 12C.

The locking mechanism 30 provides secure retention of the separation bar 20 while also allowing for controlled release under specific conditions, as explained later in the description.

The channel 12 following a path in a shape of a three segment broken line, as illustrated for example in Fig. 3, allows for a specific insertion and removal pattern of the separation bar 20. The separation bar 20 can be inserted from the top through the upper entrance portion 12A, guided horizontally through the intermediate portion 12C, and potentially released through the lower exit portion 12B at the bottom of the housing 11.

The upper entrance portion 12A and the lower exit portion 12B may be inclined relative to vertical while the intermediate portion 12C may be inclined relative to horizontal. In another embodiment, the upper entrance portion 12A and the lower exit portion 12B may be vertical while the intermediate portion 12C may be inclined relative to horizontal. The upper entrance portion 12A, is a section between an upper opening, which may also be defined as an inlet, of the channel 12 and the intermediate portion 12C. The lower exit portion 12B is a section between a lower opening, which may also be defined as an outlet, of the channel 12 and the intermediate portion 12C. The intermediate portion 12C is a portion between the upper entrance portion 12A and the lower exit portion 12B. The intermediate portion 12C may be inclined upwardly or downwardly with respect to vertical or, in a specific embodiment, it may be horizontal.

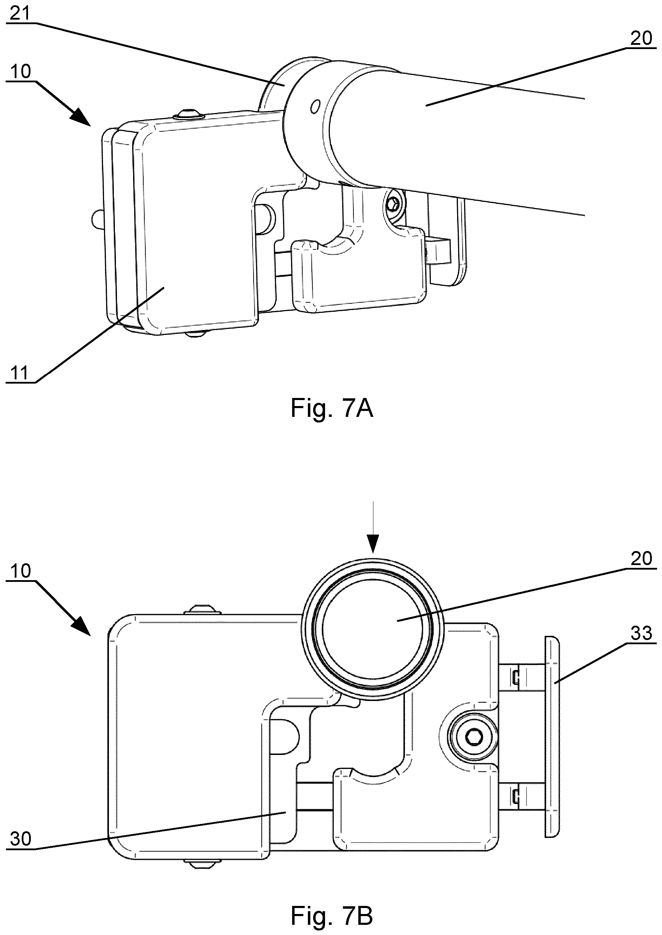

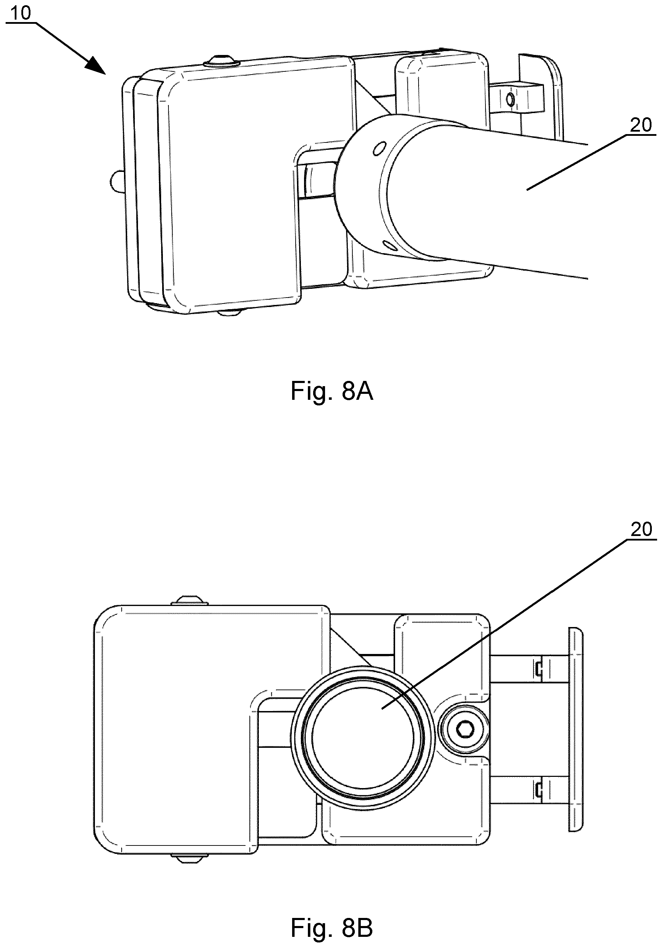

The channel 12 may also be described as having a non-linear flow path comprising two angular redirections in opposite directions, forming a generally zigzag configuration. Wherein, the channel 12 comprises the first segment (the upper entrance portion 12A) extending in a first direction, the second segment (the intermediate portion 12C) extending in a second direction at an angle relative to the first segment, and a third segment (the lower exit portion 12B) extending in a third direction substantially parallel to the first segment, wherein the second segment forms an intermediate portion between the first and third segments. Figs. 7A-8B show steps of inserting the separation bar into the bar retainer. The spring-loaded locking mechanism 30 interacts with the separation bar 20 as it moves along the channel 12. When the separation bar 20 is inserted, by the user, into the upper entrance portion 12A it acts on the locking mechanism 30, which moves to the open position. The direction of movement of the separation bar 20 is indicated with an arrow on fig. 7B. Subsequently, when the separation bar 20 is inserted and reaches the intermediate portion 12C of the channel 12 (figs. 8A and 8B), the locking mechanism 30 moves to the closed position and engages to secure the separation bar 20 in place, preventing unintended upward or horizontal movement. Under normal conditions, the spring-loaded component of the locking mechanism 30 maintains the separation bar 20 in a locked position within the intermediate portion 12C of the channel 12.

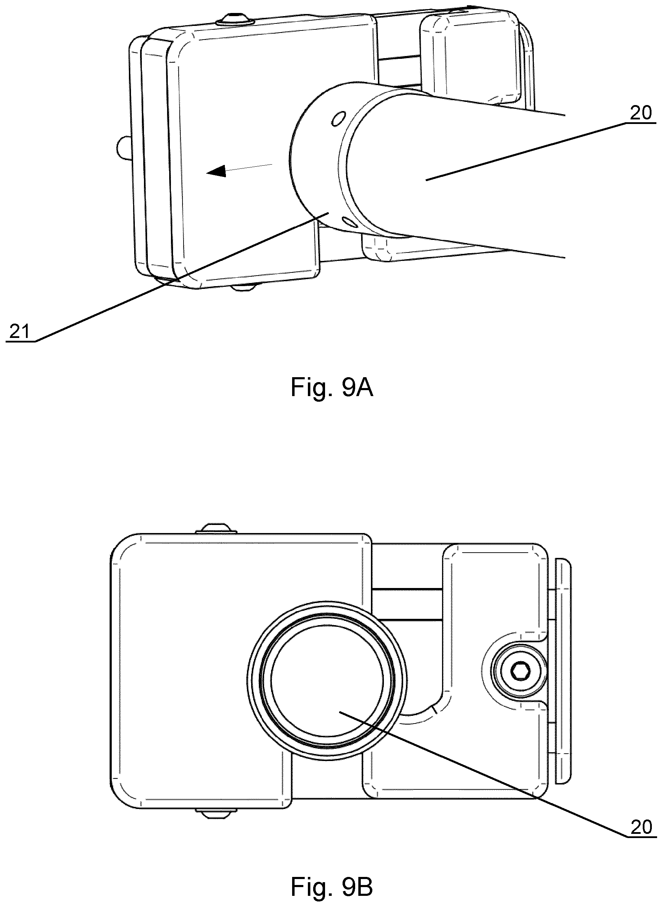

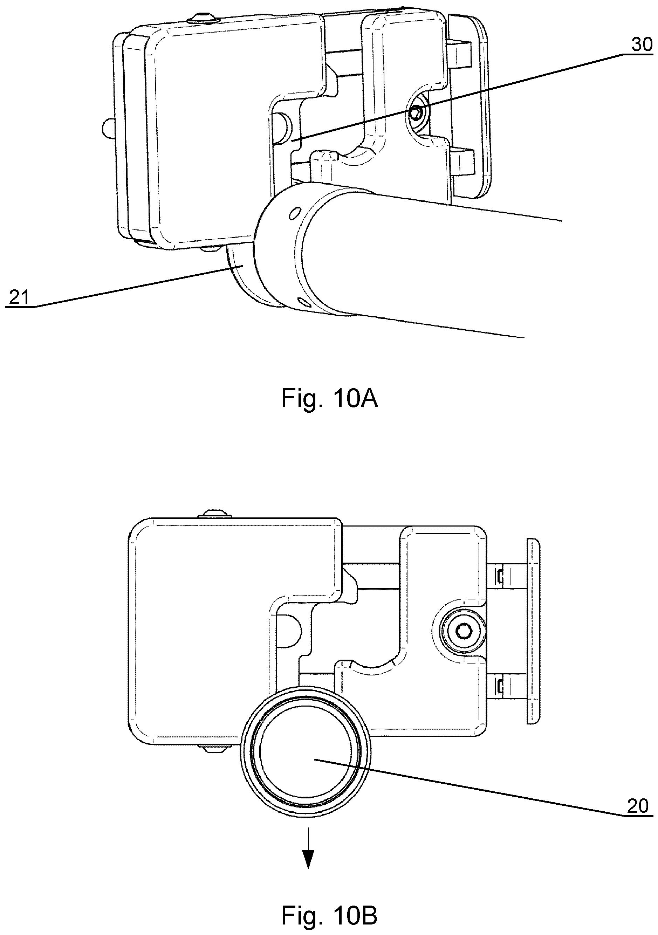

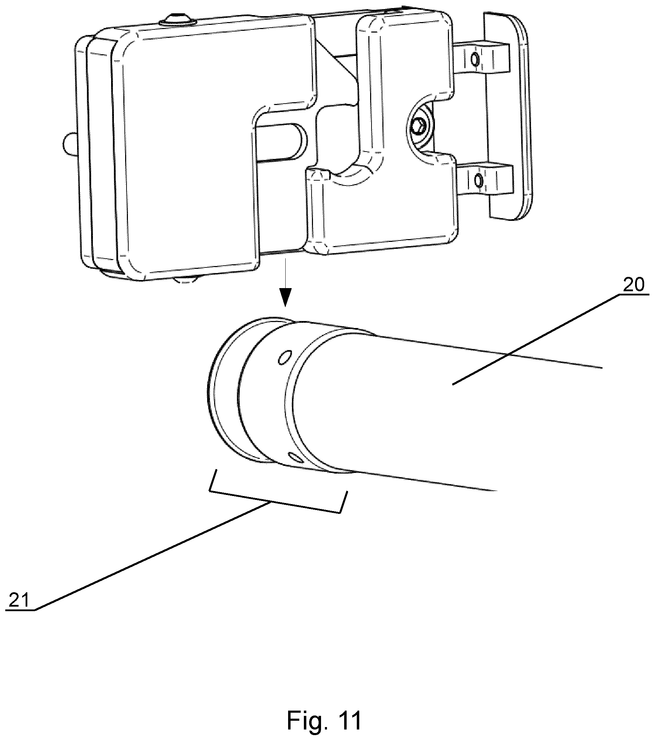

Figs. 9A-11 show steps of removing the separation bar from the bar retainer. When a horizontal force exceeding a predetermined threshold (resulting from the compression force of the spring 32) is applied to the separation bar 20, the spring-loaded component compresses (figs. 9A, 9B). This compression allows the separation bar 20 to move horizontally within the intermediate portion 12C of the channel 12. The direction of the applied force and the movement of the separation bar 20 is indicated with an arrow on fig. 9A. Once the horizontal movement occurs, the separation bar 20 can then be guided downward through the lower exit portion 12B of the channel, effectively releasing it from the blocking device (Figs. 10A, 10B and 11).

In other words, the locking mechanism 30 is configured to automatically release the separation bar 20 when an external generally horizontal force, equal to or exceeding the force needed to compress the spring 32, is applied to the separation bar 20.

The threshold force required for automatic release can be adjusted by modifying the spring 32 characteristics or the geometry of the locking mechanism 30 components. This adjustability allows for customization based on specific application requirements or safety standards.

The blocking device enables quick and safe processes for securing and releasing the separation bar. In particular, the separation bar 20 may be released from the bar retainer 10 with the use of only one hand.

Moreover, in emergency situations, such as when an animal's leg or head becomes caught above the separation bar 20, the device allows for automatic release under sufficient force, freeing the animal without human intervention.

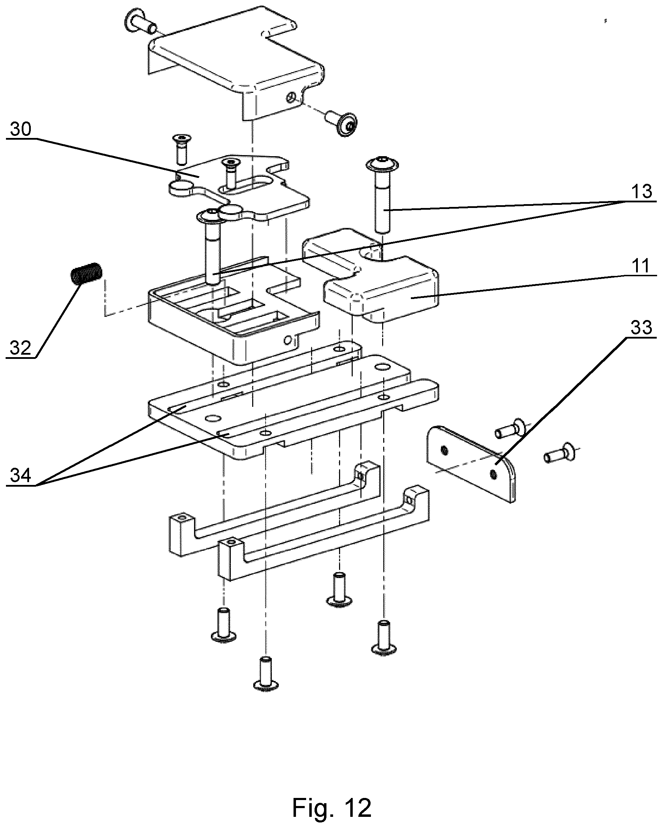

Moreover, the advantage of this device is that installation of the bar retainer 10 does not require drilling through the entire thickness of the wall, which results in improved sealing of the trailer or transport vehicle. In case of emergency, the separation bar can be released from the inside of the trailer, so there is no need to provide a through opening for an emergency release mechanism. The bar retainer 10 may be attached to the trailer wall by means of screws 13 (Fig. 12).

Preferably, the intermediate portion 12C is horizontal. The horizontal intermediate portion 12C creates a natural stopping point for the separation bar 20 during insertion. As the separation bar 20 is lowered vertically into the upper entrance portion 12A of the channel 12, its downward movement is halted when it reaches the horizontal intermediate portion 12C. This design feature helps prevent over-insertion of the bar and ensures proper positioning for engagement with the locking mechanism 30.

The horizontal orientation also facilitates the release process of the blocking device. When a horizontal force is applied to the separation bar, the bar can move along the horizontal intermediate portion 12C before being guided downward through the lower exit portion 12B. This controlled movement path allows for a smooth and predictable release process.

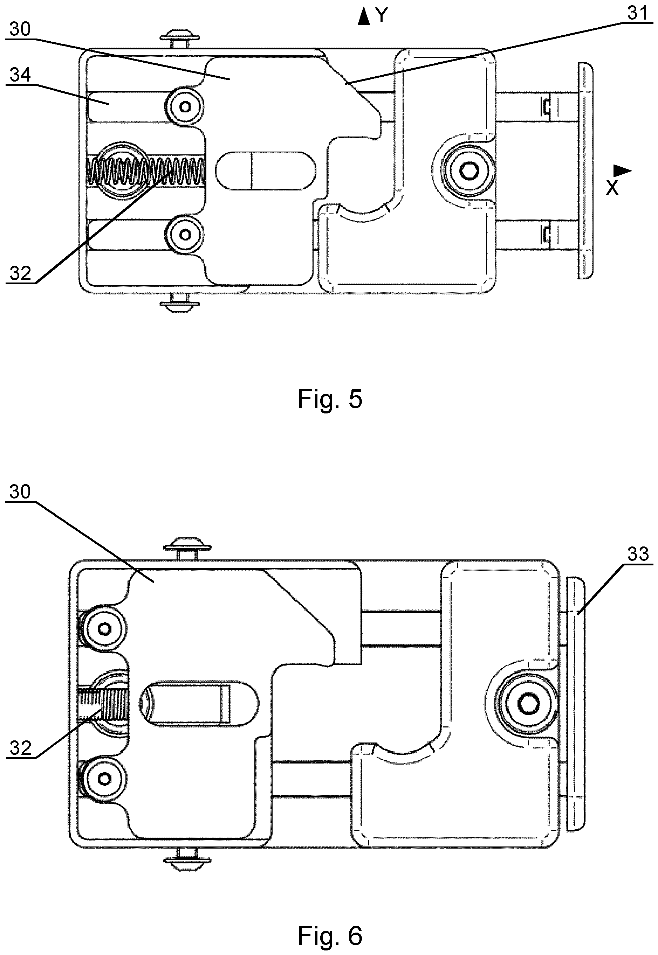

Preferably, the upper entrance portion 12A and the lower exit portion 12B are vertical, wherein the locking mechanism 30 is slidable along the X axis which is perpendicular to the vertical axis Y of the upper entrance portion 12A and the lower exit portion 12B (fig. 5).

In some examples, the bar retainer 10 may be installed at an inclination, so that the intermediate portion 12C may be inclined with respect to horizontal, while the upper entrance portion 12A and lower exit portion 12B may be inclined with respect to vertical. Even with a tilt in the overall installation, the intermediate portion preserves the functionality of the blocking device.

The mounting angle of the bottom edge of the bar retainer 10, relative to the ground or the floor of a vehicle, may be equal from 0 to 50 degrees. For example the bar retainer 10 may be mounted at an angle of twenty degrees relative to the ground or the floor of a vehicle. In such a case, the hooves of the animal, for example a horse, that jumps onto the separation bar 20 will cause pressure on the separation bar 20 from above, which, due to the angled mounting of the bar retainer 10, will cause the locking mechanism 30 to be unlocked and consequently the separation bar to be released, more easily than in case when the bar retainer 10 is mounted with its bottom edge parallel to the ground or the floor of a vehicle.

Preferably, the intermediate portion 12C comprises a socket 12D (indicated in fig. 1 and 4) for receiving the end of the separation bar 20. The socket 12D may be formed as a widened or recessed area within the intermediate portion 12C of the channel 12. The dimensions of the socket 12D may be tailored to closely match the dimensions of the end portion 21 of the separation bar 20. This close fit helps to minimize movement or rattling of the separation bar 20 when secured in the blocking device. Additionally, the socket 12D may include features such as slightly angled or curved surfaces, to guide the end portion 21 of the separation bar 20 into the correct position during insertion.

Preferably, the locking mechanism 30 comprises a bevel 31, located at the upper entrance portion 12A, forming a slide for the end portion 21 of the separation bar 20 during its insertion into the channel 12. The bevel 31 allows the end portion 21 of the separation bar 20 to smoothly slide over it thereby ensuring a controlled and easier insertion of the separation bar 20 towards the intermediate portion 12C of the channel 12. As the separation bar 20 is inserted into the channel 12, it contacts the bevel 31, which helps to push the locking mechanism 30 out of the way by gradually compressing the spring 32. The bevel 31 facilitates smooth engagement of the separation bar 20 with the bar retainer 10.

Preferably, the bevel 31 has a low friction layer, which minimizes friction during the insertion process, allowing the separation bar 20 to glide easily into a blocked position within the channel 12. This reduction in friction may contribute to a more fluid and controlled insertion motion, potentially enhancing the overall user experience and reducing the risk of misalignment or jamming during the securing process.

Preferably, the locking mechanism 30 comprises a handle 33 located outside the housing 11, for manually releasing the separation bar 20. The handle 33 is mechanically connected to the spring-loaded locking mechanism 30 inside the housing. For manual release, the user can operate the handle 33, located outside the housing 11 of the bar retainer 10. When the handle 33 is actuated, for example it is pressed, it causes the spring 32 to compress and thereby disengages the locking mechanism 30, allowing the separation bar 20 to be removed either through the lower exit portion 12B or the upper entrance portion 12A of the channel 12.

The positioning of the handle 33 outside the housing ensures that it remains easily accessible at all times. An operator can locate and actuate the handle quickly, even in low-light conditions or while wearing gloves.

Preferably, the blocking device comprises two bar retainers 10 each for one end portion 21 of the separation bar 20. A separation bar has two ends. Each of those two bar retainers 10 can be mounted on vehicle walls that are opposite one another. In some examples, the blocking device includes two bar retainers 10, with each bar retainer 10 configured to secure one end portion 21 of the separation bar 20. This dual bar retainer configuration provides enhanced stability and security for the separation bar 20 within the animal transport equipment. The two bar retainers work in tandem to securely hold the separation bar in place.

To secure the separation bar 20, a user inserts the separation bar 20 from above into the upper entrance portion 12A of the channel 12 in the bar retainer 10. The user then guides the separation bar 20 along the channel 12 until the separation bar 20 engages with the locking mechanism 30 in the intermediate portion 12C of the channel 12. During the insertion, the separation bar 20 pushes the locking mechanism 30 towards its open position. When the separation bar 20 reaches the intermediate portion 12C, the locking mechanism moves back to the closed position.

For releasing the separation bar 20 the user may push the separation bar 20 horizontally, to overcome the compression force of the spring 32, and then vertically downward through the lower exit portion 12B of the channel 12. Similarly, an animal which is entangled in the separation bar 20, may intuitively manipulate the bar by pulling and pushing it in a generally horizontal direction, in an attempt to free itself, while simultaneously forcing the separation bar downwards-. As a result with a high certainty the separation bar becomes released from the bar retainer 10.

The force acting on the separation bar 20 compresses the spring 32 in the locking mechanism 30, allowing the separation bar to move horizontally and then vertically downward through the channel 12.

The blocking device for restraining an animal provides a quick and, in case of an emergency, semi-automatic system for securing and releasing a separation bar, particularly useful in horse trailers and other animal transport applications. The device can be employed in various contexts beyond horse trailers, such as cattle trailers, stables, cowsheds or for restraining other animals in an animal box or stall. The device can be used any place where there is a need to maintain an animal steady between 2 panels or walls, for example in a horse walker, or in a space destined for horse insemination.

## Claims

**1.** A blocking device for restraining an animal, comprising:
- a separation bar (20);
- a bar retainer (10), for retaining the separation bar (20), comprising a housing (11) having a channel (12) formed therein for guiding an end portion (21) of the separation bar (20) along the housing (11), wherein the channel (12) comprises an upper entrance portion (12A) at an upper end of the housing (11) and a lower exit portion (12B) at a lower end of the housing (11);
**characterized in that**:
- the upper entrance portion (12A) and the lower exit portion (12B) are laterally shifted with respect to each other, wherein the channel (12) comprises an intermediate portion (12C) laterally connecting the upper entrance portion (12A) and the lower exit portion (12B);
- the bar retainer (10) comprises a spring-loaded locking mechanism (30) movable transversely across the channel (12), for blocking upward movement of the separation bar (20) and for restraining the horizontal movement of the separation bar (20), when the end portion (21) of the separation bar (20) is positioned at the intermediate portion (12C) of the channel (12).

**2.** The blocking device according to claim 1, wherein the intermediate portion (12C) is horizontal.

**3.** The blocking device according to claim 1 or 2, wherein the intermediate portion (12C) comprises a socket (12D) for receiving the end portion (21) of the separation bar (20).

**4.** The blocking device according to any of the previous claims, wherein the locking mechanism (30) comprises a bevel (31), located at the upper entrance portion (12A), forming a slide for the end portion (21) of the separation bar (20).

**6.** The blocking device according to any of the previous claims, wherein the locking mechanism (30) comprises a handle (33) located outside the housing (11), for manually releasing the separation bar (20).

**7.** The blocking device according to any of the previous claims, comprising two bar retainers (10) each for one end portion (21) of the separation bar (20).
